# FASCICULE DE BREVET EUROPEEN

(11) **EP 2 959 554 B1**
(45) Date de publication et mention de la délivrance du brevet: **10.04.2019**
(21) Numéro de dépôt: 14705191.6
(22) Date de dépôt: 19.02.2014
(51) Int. Cl.: H02G 5/06

(54) **DISPOSITIF DE FIXATION POUR PSEM**
FIXIERUNGSVORRICHTUNG FÜR GASISOLIERTE SCHALTANLAGE
FIXATION ELEMENT FOR A GIS

(30) Priorité: 21.02.2013 FR 1351506
(43) Date de publication de la demande: 30.12.2015
(73) Titulaire: General Electric Technology GmbH, 5400 Baden (CH)
(72) Inventeur: GERBER, Philip, 5035 Unterentfelden (CH); LÜSCHER, Robert, CH-5703 Seon (CH); TREIER, Lukas, CH-5043 Holziken (CH)
(74) Mandataire: Fischer, Michael Maria
(86) Numéro de dépôt international: PCT/EP2014/053209
(87) Numéro de publication internationale: WO 2014/128152

(56) Documents cités:
- DE-A1- 2 624 325
- US-B1- 6 268 562

## Description

### DOMAINE TECHNIQUE

L'invention porte sur l'assemblage de postes électriques à haute ou moyenne tension sous enveloppe métallique à isolation gazeuse (PSEM) communément appelés GIS (Gas-Insulated Substations). Les postes de ce type comportent des appareillages, en particulier des sectionneurs de barre, des disjoncteurs ou des sectionneurs de mise à la terre. De tels appareillages sont généralement isolés les uns des autres à l'hexafluorure de soufre (SF6) dans des cuves sous pression.

L'invention porte plus particulièrement sur un dispositif de fixation pour une utilisation dans de telles installations compartimentées sous moyenne ou haute tension.

On peut distinguer différents types de PSEM : les installations monophasées et les installations triphasées. Dans un équipement monophasé, une cuve ne contient les parties sous tension que d'une seule phase. Dans un équipement triphasé, une cuve contient les parties sous tensions de trois phases.

La présente invention s'applique aussi bien aux PSEM monophasés qu'aux PSEM triphasés.

L'invention peut également être utilisée dans tout type d'équipement compartimenté sous moyenne ou haute tension, par exemple dans des GIL (ou Gas-Insulated [Transmission] Lines) qui sont des lignes conductrices isolées selon le même principe pour connecter par exemple des PSEM à des lignes aériennes.

### ÉTAT DE LA TECHNIQUE ANTÉRIEURE

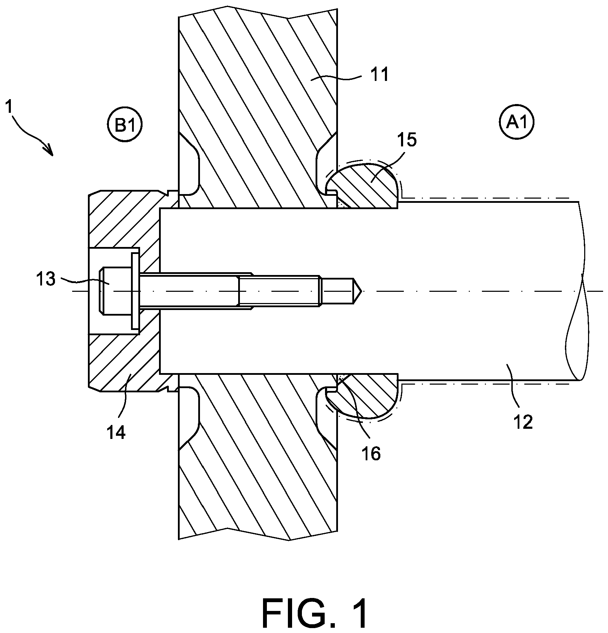

La figure 1 illustre un dispositif de fixation 1 en usage aujourd'hui sur des PSEM. Cette figure 1 montre un isolant support 11 comportant un conduit recevant un conducteur 12. Le conducteur 12 est fixé dans le conduit de l'isolant support 11 au moyen d'un organe de fixation 13 serré contre une douille 14. Ici, l'organe de fixation 13 comporte une vis et une rondelle intercalée. Un autre conducteur, par exemple du type du conducteur 12, peut être connecté contre la douille 14. Dans ce cas-là, cet autre conducteur aura une extrémité creuse venant englober la douille 14 tout en permettant la connexion électrique.

Lorsque que le PSEM est en service, le conducteur 12 est sous tension à une valeur de 30kV ou plus. Un pare-effluve 15 (en anglais : corona shield) est nécessaire pour empêcher toute perturbation électrique (en anglais : electrical discharge) sur le pourtour du conducteur 12.

Le conducteur 12 est typiquement fait d'un alliage d'aluminium ou de cuivre. Le pare-effluve 15 est réalisé typiquement en matériau conducteur ou partiellement conducteur.

En plus de son rôle de support physique du conducteur 12, l'isolant support 11 a pour rôle de séparer des compartiments A1 et B1 remplis de gaz sous pression. Les compartiments A1 et B1 situés de part et d'autre de l'isolant 11 doivent être isolés l'un par rapport à l'autre de façon étanche aux gaz. Un joint circulaire 16 (en anglais O-ring) entre le pare-effluves, le conducteur et l'isolant support 11 permet cette étanchéité aux gaz.

Le document DE2624325 A1 décrit un dispositif de fixation pour installation de type PSEM, comportant une bague recevant une tige filetée fixée à un conducteur électrique.

Les différents composants des cuves sont assemblés à l'usine et sur site. D'une manière générale, il est souhaitable de limiter le temps d'assemblage sur site.

### EXPOSÉ DE L'INVENTION

L'invention porte ainsi sur un dispositif de fixation pour installation de type PSEM, comportant une tige filetée conductrice et une bague conductrice, la bague comportant un passage configuré pour recevoir la tige filetée de façon étanche aux gaz, le dispositif de fixation étant destiné à connecter électriquement deux éléments conducteurs et à les maintenir montés chacun sur la tige filetée.

Le nouveau dispositif de fixation est conçu pour pouvoir être partiellement préassemblé en usine et donc réduire le temps de montage sur site. Le préassemblage limite aussi les erreurs d'assemblage sur site.

Le dispositif de fixation selon l'invention a l'avantage de pouvoir être mis en oeuvre à la fois dans des installations monophasées et triphasées.

Dans le cas d'installations triphasées, les bagues peuvent être alignées sur l'isolant support, ou disposées en triangle ou encore selon une configuration différente.

Selon une caractéristique avantageuse, la tige filetée comporte en outre au moins un premier organe d'étanchéité aux gaz, par exemple un joint annulaire, celui-ci étant disposé dans une gorge formée sur une partie médiane de la tige filetée.

Avantageusement, la gorge est ménagée sur un bossage formé sur la partie médiane.

Selon une caractéristique particulière de l'invention, la tige filetée comporte au moins un filetage de chaque côté de sa partie médiane.

La présence de filetages sur la tige permet de limiter la résistance électrique des points de contacts entre pièces conductrices et donc de réduire les points chauds dans les PSEM.

Le fait d'avoir plusieurs filetages permet en outre de décomposer l'assemblage global en plusieurs étapes d'assemblage de sous-modules dont certaines peuvent être avantageusement réalisées à distance du site d'assemblage final du PSEM.

Avantageusement, la tige filetée peut comporter au moins un deuxième organe d'étanchéité aux gaz, celui-ci étant disposé dans une deuxième gorge formée sur la partie médiane de la tige filetée.

Les deux éléments conducteurs peuvent chacun être par exemple une portion de barre ou une douille.

Dans un état assemblé de l'installation de type PSEM, c'est-à-dire dans un état assemblé du dispositif de fixation dans une installation de type PSEM :
- la tige filetée est disposée dans le passage de la bague de façon étanche aux gaz, et/ou,
- la bague est logée de façon étanche aux gaz dans un isolant support que comporte l'installation et/ou un premier et un deuxième filetage sont en prise sur un filetage respectif d'un premier et d'un deuxième élément conducteur, et/ou,
- le dispositif de fixation connecte électriquement les deux éléments conducteurs et les maintient montés chacun sur l'une respective de deux faces de la bague, de part et d'autre de l'isolant support,
- et/ou, la tige dépasse des faces de la bague lorsqu'elle est disposée dans le passage, au moins un filetage respectif dépassant par exemple de chaque face.

Le diamètre de chacun des filetages de la tige filetée est de préférence inférieur au diamètre minimal du passage. L'insertion de la tige filetée dans le passage de la bague se fait ainsi très simplement par coulissement, permettant une manipulation aisée du sous-module comportant la tige filetée et le premier élément conducteur.

Selon une caractéristique particulièrement avantageuse, au moins un élément de détrompage est prévu sur une face donnée de la bague afin d'autoriser la mise en place d'une seule extrémité particulière d'un même élément conducteur contre ladite face donnée.

Le dispositif de fixation est ainsi conçu pour éviter les erreurs d'orientation des éléments conducteurs.

Lorsque la tige filetée est disposée dans le passage de la bague, la tige peut dépasser de chaque côté de la bague d'une longueur comprise entre 20mm et 60mm.

L'invention porte encore sur un ensemble comportant un isolant support pour PSEM et un dispositif de fixation tel que décrit ci-dessus, au moins une bague du dispositif de fixation étant disposée dans l'isolant support. L'isolant support est par exemple surmoulé autour d'au moins une bague du dispositif de fixation.

Dans un mode de réalisation particulier, l'isolant support est surmoulé autour de bagues de trois dispositifs de fixation.

Avantageusement, l'isolant support est en résine de polyester ou en résine d'epoxy.

L'invention porte encore sur une installation de type PSEM comportant un isolant support pourvu d'au moins un dispositif de fixation tel que décrit ci-dessus.

Avantageusement, les éléments conducteurs sont montés sur la tige filetée et/ou contre la bague 34.

L'invention porte également sur un procédé d'assemblage d'un premier élément conducteur et d'un deuxième élément conducteur de part et d'autre d'un ensemble tel que décrit ci-avant, comportant les étapes suivantes :
- montage d'une première extrémité de la tige filetée avec une extrémité du premier élément conducteur,
- insertion d'une deuxième extrémité de la tige filetée à travers le passage de la bague du dispositif de fixation,
- montage de la deuxième extrémité de la tige filetée avec une extrémité du deuxième élément conducteur.

### BRÈVE DESCRIPTION DES DESSINS

L'invention sera mieux comprise et d'autres caractéristiques, détails et avantages de celle-ci apparaîtront plus clairement à la lecture de la description qui suit, faite à titre d'exemple non limitatif, et en référence aux dessins annexés dans lesquels :
- la figure 1 est une vue d'un dispositif de fixation entre un conducteur et une douille situés de part et d'autre d'un isolant support dans deux compartiments étanches aux gaz et sous pression de l'état de la technique,
- la figure 2 est une vue en coupe d'un dispositif de fixation selon l'invention entre un conducteur et une douille situés de part et d'autre d'un isolant support dans deux compartiments étanches aux gaz, mettant en oeuvre un goujon et une bague intermédiaire,
- la figure 3 est une vue en coupe du dispositif de fixation de la figure 2 mis en oeuvre dans un compartiment de PSEM triphasé,
- la figure 4 est une vue en coupe et en perspective des éléments de la figure 3,
- la figure 5 est une variante du dispositif de fixation de la figure 2.

### EXPOSÉ DÉTAILLÉ DE MODES DE RÉALISATION PARTICULIERS

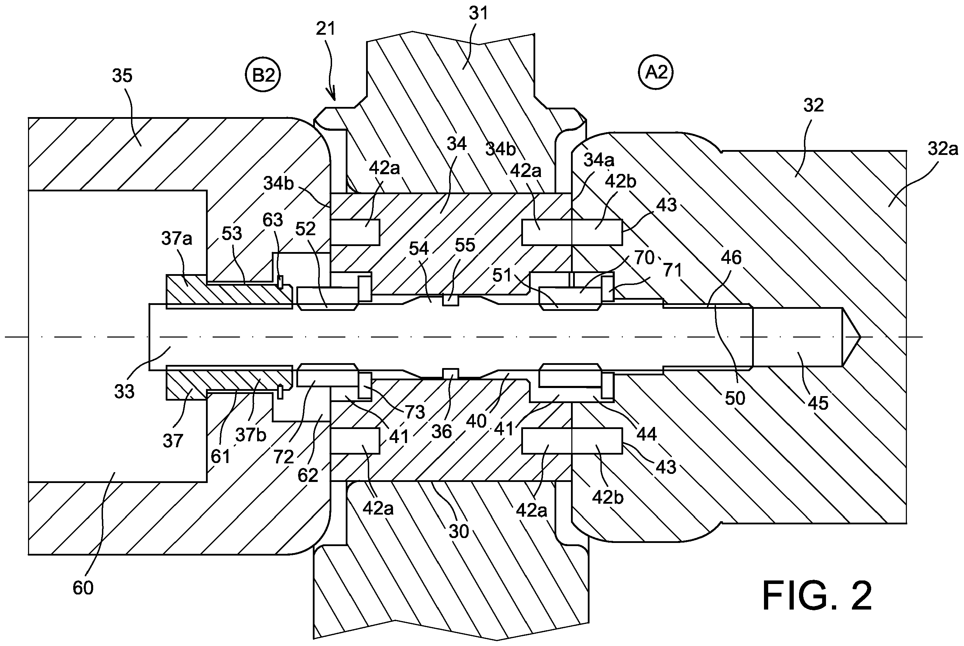

La figure 2 montre un isolant support 31 séparant deux compartiments A2 et B2 remplis de gaz sous pression. Un conducteur 32, ici une portion de barre, et une douille 35 sont montés sur l'isolant support 31 par l'intermédiaire d'un dispositif de fixation 21. Le dispositif de fixation 21 comporte une tige filetée 33 et une bague 34.

Les deux compartiments A2 et B2 sont ménagés dans une cuve de PSEM (non représentés ici).

L'isolant support 31 est isolant électriquement et est fait de matériaux de type résines de polyester ou résines d'epoxy. La bague 34 est disposée dans l'isolant support 31. L'isolant 31 est ici conçu par surmoulage autour de la bague 34. Alternativement, la bague 34 est par exemple insérée dans l'isolant 31 au moment du montage final.

La bague 34 est un élément annulaire s'étendant entre deux faces planes 34a et 34b. Sur chacune de ses deux faces, la bague 34 présente un alésage 41 et des perçages 42a disposés autour de l'alésage 41. Ici, deux perçages 42a sont ménagés à travers chaque face. Leur nombre peut être plus important ou plus faible. Un alésage central 40 de diamètre moindre que les alésages 41 s'étend entre les parois de fond de ceux-ci 41.

La tige filetée 33 est une pièce allongée qui comporte un bossage 54 dans sa partie médiane. Le bossage 54 est pourvu d'une gorge circonférentielle 55 destinée à accueillir un élément d'étanchéité 36. L'élément d'étanchéité 36 est ici un joint torique. Le joint torique 36 peut être réalisé en un matériau isolant électrique ou partiellement conducteur tel que des gommes de silicone ou de l'EPDM.

Avantageusement, il est possible d'utiliser plus d'un joint torique 36, par exemple deux, chacun disposé dans une gorge circonférentielle du type de la gorge 55 (variante non représentée). La présence de deux joints toriques permet de limiter le taux de fuite à une valeur inférieure à la limite de 0,5% par an imposée par la norme IEC 62271-203.

La tige filetée 33 comporte en outre quatre filetages 50 à 53 disposés par paire de chaque côté du bossage 54.

Avantageusement, les filetages 50 et 51 peuvent être confondus en un même filetage d'un premier côté de la tige 33, et les filetages 52 et 53 peuvent être confondus en un seul autre filetage du deuxième côté de la tige 33.

La tige filetée 33 est prévue pour être montée dans la bague 34, le bossage 54 étant disposé dans l'alésage 40 et le joint torique 36 empêchant tout échange gazeux (ici du SF₆) entre les compartiments A2 et B2. La tige 33 est ici conçue pour dépasser de chaque côté de la bague lorsqu'elle est disposée dans l'alésage 40. Préférentiellement, la tige 33 dépasse de chaque côté de la bague 34 d'une longueur comprise entre 20mm et 60mm. Par exemple et non limitativement, la tige 33 peut dépasser de chaque côté de la bague de l'ordre de 40mm. L'utilisation d'une longue tige 33 offre une meilleure stabilité mécanique.

Le conducteur 32 est un élément longitudinal, par exemple une portion de barre, prévu pour être monté par une première extrémité 32a contre une première face 34a de la bague 34.

Un alésage 44 et des perçages 42b sont ménagés sur la surface de première extrémité 32a.

Les perçages 42b sont prévus pour être disposés en vis-à-vis des perçages 42a dans la position d'assemblage particulière représentée en figure 2. Chaque couple de perçages 42a et 42b disposés en vis-à-vis est prévu pour accueillir conjointement un pion 43. Les pions 43 et les perçages 42a et 42b servent ainsi de détrompeur lors de la mise en place du conducteur 32 contre la bague 34, limitant les erreurs d'assemblage. La position d'assemblage représentée en figure 2 répond à une orientation angulaire souhaitée.

En variante non représentée, le conducteur 32 présente un nombre de perçages 42b et de pions 43 différent de deux, par exemple un ou trois.

L'alésage 44 possède ici les mêmes dimensions que l'alésage 41 et est prévu pour être disposé en vis-à-vis de celui-ci 41. Un alésage 45 de diamètre moindre que l'alésage 44 s'étend depuis la paroi de fond de ce dernier 44. Un filetage 46 est ménagé sur la surface interne de l'alésage 45. Ce filetage 46 est prévu pour coopérer avec le filetage 50 afin de solidariser la tige filetée 33 et le conducteur 32.

La douille 35 présente ici un logement 60 et deux alésages 61 et 62. Le logement 60 est destiné à recevoir la deuxième extrémité (non représentée) d'un conducteur du type du conducteur 32. Comme en témoignent les figures, le logement 60 est ici configuré pour des conducteurs comportant une deuxième extrémité de dimensions inférieures à la première 32a. En variante, les dimensions de la deuxième extrémité peuvent être semblables ou supérieures à celles de la première extrémité 32a. Si les dimensions des extrémités de conducteur sont choisies semblables, elles seront préférentiellement configurées pour que des éléments de détrompage, comme par exemple les perçages 42a et 42b et les pions 43, ne permettent la mise en place que d'une extrémité particulière contre une face donnée de la bague 34 dans la position d'assemblage particulière représentée en figure 2.

L'alésage 62 est disposé du côté de la douille opposé au logement 60.

L'alésage 61 s'étend de la paroi de fond de l'alésage 62 à la paroi de fond du logement 60. Le diamètre de l'alésage 61 est inférieur à la fois à celui du logement 60 et à celui de l'alésage 62.

Dans le mode de réalisation représenté, le dispositif de fixation 21 comporte un manchon 37. Le manchon 37 est destiné à être monté sur le filetage 53 de manière à maintenir la douille 35 contre une deuxième face 34b de la bague 34. Pour cela, le manchon 37 comporte une tête 37a et un corps 37b, tous deux cylindriques. La tête 37a est prévue pour venir en appui contre la paroi de fond du logement 60 et le corps 37b est prévu pour être introduit dans l'alésage 61 et dépasser dans l'alésage 62.

Préférentiellement, un jonc de retenue 63 est disposé dans une gorge d'extrémité du corps 37b, dans l'alésage 62. Le jonc 63 a pour rôle de retenir le manchon 37 dans la douille 35 de manière imperdable. Il est ainsi possible de préassembler ces deux éléments 35 et 37 en usine afin de gagner du temps à l'installation des PSEM sur leur lieu d'assemblage final.

Additionnellement, dans le mode de réalisation représenté, l'alésage 62 est conçu pour venir partiellement envelopper un écrou 70 monté sur l'extrémité de la tige filetée 33.

Alternativement, en l'absence de jonc 63, l'alésage 62 et l'alésage 61 peuvent former un seul conduit de diamètre constant.

La bague 34, la tige filetée 33, la douille 35, le conducteur 32 et le manchon 37 sont faits dans un matériau conducteur préférentiellement choisi parmi les alliages d'aluminium, d'acier ou de cuivre. Pour une conductivité encore améliorée, les surfaces de contact du conducteur 32, de la bague 34 et/ou de la douille 35 sont revêtues d'argent.

On décrit maintenant un exemple de processus de montage du conducteur 32, de la douille 35 et du dispositif de fixation 21 sur l'isolant support 31.

Au cours d'une première étape, on préassemble ici trois sous-ensembles.

On monte tout d'abord la tige filetée 33 dans la première extrémité 32a du conducteur 32, le filetage 50 venant en prise sur le filetage 46. On monte ici également un écrou 70 et une rondelle intercalée 71 sur le filetage 51. L'écrou 70 et la rondelle 71 ont pour rôle d'empêcher un desserrage de la tige 33 par rapport au conducteur 32.

Indépendamment de l'assemblage de ce premier sous-ensemble comportant la tige 33 et le conducteur 32, on forme ici un second sous-ensemble par surmoulage de l'isolant support 31 autour de la bague 34.

On assemble un troisième sous-ensemble comportant la douille 35 et le manchon 37, maintenus ensemble par le jonc 63.

Il est possible de pré-assembler d'une part la tige 33 et le conducteur 32, d'autre part la douille 35 et le manchon 37 en usine, c'est-à-dire en dehors du site d'assemblage prévu du PSEM.

Lors d'une deuxième étape, on insère par coulissement la tige 33 dans la bague 34. Les pions 43 de détrompage sont en place dans les perçages 42a et/ou 42b. On respecte ainsi une orientation souhaitée du conducteur 32. Le conducteur 32 est alors disposé en butée contre la bague 34. A ce point-là, la portion de la tige filetée 33 portant les filetages 52 et 53 dépasse de la bague 34 à l'opposé du conducteur.

On monte ici un écrou 72 sur le filetage 52 avec une rondelle intercalée 73, la rondelle 73 venant au fond de l'alésage 41 correspondant. L'écrou 72 et la rondelle 73 permettent de maintenir et d'assurer l'alignement de la tige 33 en position par rapport à la bague 34 avant l'étape suivante.

On peut alors disposer, lors d'une troisième étape, la douille 35 contre la bague 34. Le manchon 37 est serré sur le filetage 53 de manière à maintenir la douille 35 contre la bague 34.

Le module obtenu en fin de deuxième ou de troisième étape, c'est-à-dire comportant l'isolant 31, le conducteur 32, la tige 33, la bague 34 et éventuellement la douille 35 et le manchon 37 peut également être assemblé préalablement à sa mise en place sur le PSEM. Il est alors possible d'acheminer ce module sur le site d'implantation final et de procéder à l'assemblage du PSEM en un temps réduit.

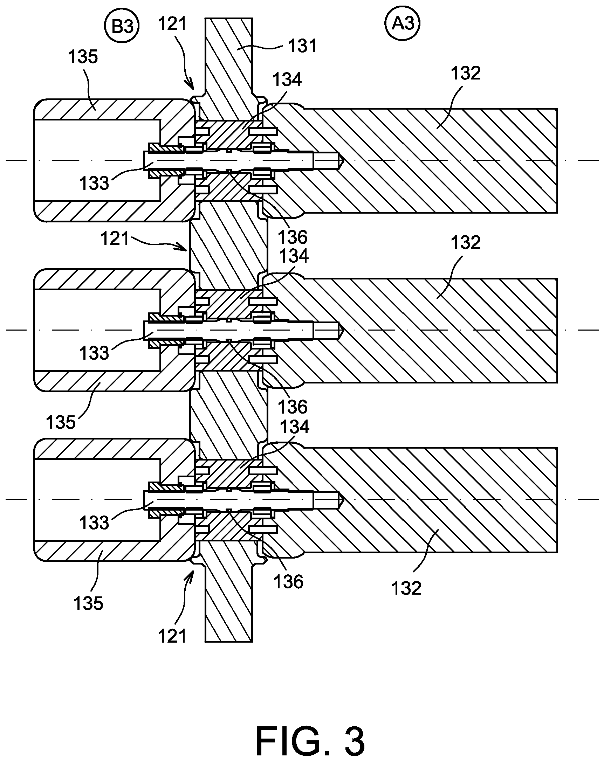

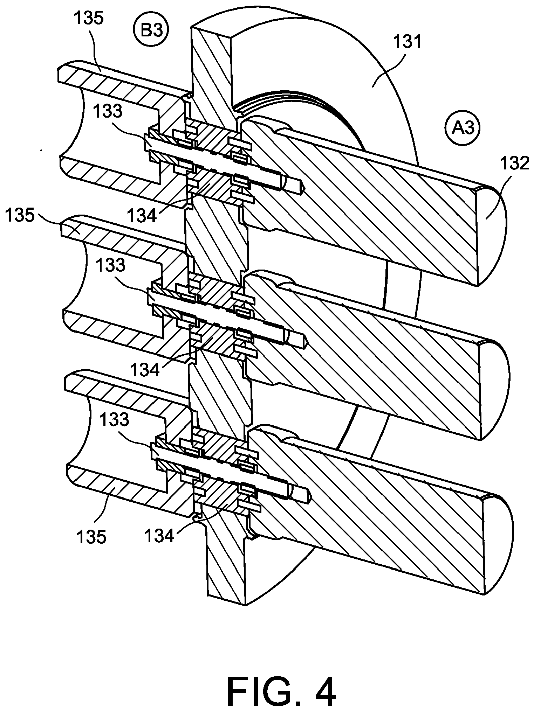

Les figures 3 et 4 illustrent un isolant support 131 séparant deux compartiments A3 et B3. L'isolant 131 convient à une installation triphasée de type PSEM dans laquelle les trois phases sont disposées dans les mêmes cuves. L'isolant 131 accueille trois bagues 134 du type de la bague 34. Les trois bagues 134 sont disposées ici en ligne les unes par rapport aux autres.

Les autres éléments illustrés en figure 3 et 4 sont sensiblement identiques aux éléments du mode de réalisation illustré en figure 2. Les numéros de référence sont ainsi augmentés de 100. Pour les détails techniques, on se réfèrera à la description qui précède.

Comme pour l'assemblage de la structure décrite en référence à la figure 2, l'assemblage de trois phases sur le même isolant support 131 peut être avantageusement effectué au préalable, hors du site d'assemblage final. L'assemblage final est ainsi plus rapide.

En variante non représentée, les bagues 134 sont disposées en triangle dans l'isolant support.

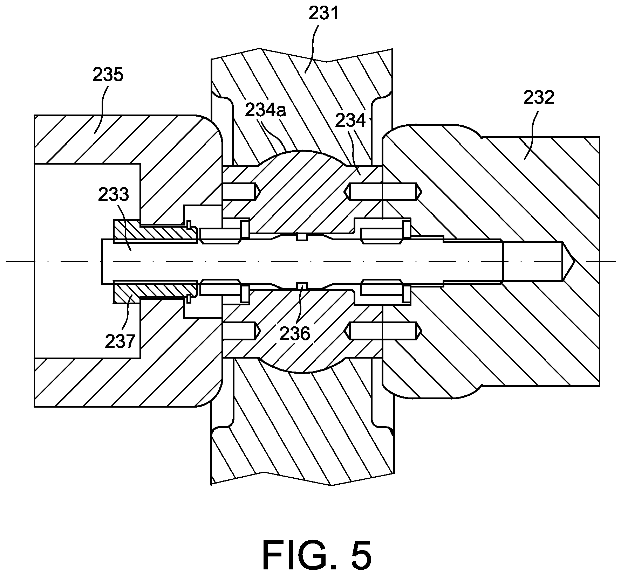

En figure 5, une variante de l'isolant 31 et de la bague 34 est illustrée. Ici, la bague 234 comporte un bossage 234a supplémentaire dans sa partie médiane. Préférentiellement, le bossage 234a est formé de corps avec la bague 234.

En variante non représentée, le bossage fait partie d'une pièce rapportée sur la bague.

Il est possible de surmouler un isolant support du type de 231 autour d'une bague non cylindrique comme la bague 234. Le bossage 234a permet de tirer parti du procédé de surmoulage de résines de polyester ou de résines d'epoxy, en améliorant la tenue de l'isolant support autour de la bague et en rendant la bague et l'isolant support indissociables.

Dans la description qui précède, on a décrit le montage sur la tige filetée d'un premier élément conducteur comportant une douille 35 et un manchon 37 et d'un deuxième élément conducteur formé ici du conducteur 32. En variante non représentée, le dispositif de fixation permet de monter sur la tige filetée deux éléments conducteurs comportant chacun une douille 35 et un manchon 37. Dans une variante supplémentaire, le dispositif permet de monter sur la tige filetée deux conducteurs du type des portions de barre 32.

Diverses variantes sont possibles sans sortir du cadre de l'invention.

## Revendications

1. Dispositif de fixation pour installation de type PSEM, comportant une tige filetée (33 ; 133 ; 233) conductrice et une bague (34 ; 134 ; 234) conductrice, la bague (34 ; 134 ; 234) comportant un passage (40, 41) configuré pour recevoir la tige filetée (33 ; 133 ; 233) de façon étanche aux gaz, la tige filetée dépassant de chaque côté de la bague (34 ; 134 ; 234) lorsqu'elle est reçue dans le passage, le dispositif de fixation étant configuré pour connecter électriquement deux éléments conducteurs (32, 35 ; 132, 135 ; 232 ; 235) et pour les maintenir montés chacun sur la tige filetée (33 ; 133 ; 233).

2. Dispositif de fixation selon la revendication précédente, la tige filetée comportant en outre au moins un premier organe d'étanchéité (36 ; 136 ; 236) aux gaz, celui-ci étant disposé dans une gorge (55) formée sur une partie médiane de la tige filetée.

3. Dispositif de fixation selon la revendication précédente, la gorge (55) étant ménagée sur un bossage (54) formé sur la partie médiane.

4. Dispositif de fixation selon l'une des revendications précédentes, la tige filetée comportant au moins un filetage (50-53) de chaque côté d'une partie médiane.

5. Dispositif de fixation selon l'une des revendications 2 à 4, la tige filetée comportant au moins un deuxième organe d'étanchéité aux gaz, celui-ci étant disposé dans une deuxième gorge formée sur la partie médiane de la tige filetée.

6. Dispositif de fixation selon l'une des revendications précédentes, au moins un élément de détrompage (42a, 43) étant prévu sur une face donnée (34a, 34b) de la bague afin d'autoriser la mise en place d'une extrémité unique d'un seul parmi les éléments conducteurs contre ladite face donnée.

7. Ensemble comportant un isolant support pour PSEM et un dispositif de fixation selon l'une des revendications précédentes, au moins une bague du dispositif de fixation étant disposée dans l'isolant support.

8. Ensemble selon la revendication 7, l'isolant support étant surmoulé autour d'au moins une bague du dispositif de fixation.

9. Ensemble selon l'une des revendications 7 ou 8, l'isolant support étant surmoulé autour de bagues (134) de trois dispositifs de fixation.

10. Ensemble selon l'une des revendications 7 à 9, l'isolant support étant en résine de polyester ou en résine d'epoxy.

11. Installation de type PSEM comportant un isolant support pourvu d'au moins un dispositif de fixation selon l'une des revendications 1 à 6.

12. Installation de type PSEM selon la revendication précédente, les éléments conducteurs étant montés sur la tige filetée 33.

13. Installation de type PSEM selon l'une des revendications 11 et 12, les éléments conducteurs étant montés contre la bague 34.

14. Procédé d'assemblage d'un premier élément conducteur et d'un deuxième élément conducteur de part et d'autre d'un ensemble selon l'une des revendications 7 à 10, comportant les étapes suivantes :
- montage d'une première extrémité de la tige filetée avec une extrémité du premier élément conducteur,
- insertion d'une deuxième extrémité de la tige filetée à travers le passage de la bague du dispositif de fixation,
- montage de la deuxième extrémité de la tige filetée avec une extrémité du deuxième élément conducteur.

## Patentansprüche

1. Befestigungsvorrichtung für eine Anlage vom Typ GIS, die eine leitende Gewindestange (33; 133; 233) und einen leitenden Ring (34; 134; 234) umfasst, wobei der Ring (34; 134; 234) einen Durchgang (40, 41) aufweist, der dafür ausgebildet ist, die Gewindestange (33; 133; 233) gasdicht aufzunehmen, wobei die Gewindestange, wenn sie im Durchgang aufgenommen ist, auf jeder Seite des Rings (34; 134; 234) herausragt, wobei die Befestigungsvorrichtung dafür ausgebildet ist, zwei leitende Elemente (32, 35; 132, 135; 232; 235) elektrisch zu verbinden, und dafür, jedes derselben auf der Gewindestange (33; 133; 233) montiert zu halten.

2. Befestigungsvorrichtung nach dem vorstehenden Anspruch, wobei die Gewindestange weiter mindestens ein erstes Gasdichtungsorgan (36; 136; 236) aufweist, wobei dasselbe in einer Kehle (55) angeordnet ist, die an einem mittleren Teil der Gewindestange gebildet ist.

3. Befestigungsvorrichtung nach dem vorstehenden Anspruch, wobei die Kehle (55) an einer Erhebung (54) ausgestaltet ist, die am mittleren Teil gebildet ist.

4. Befestigungsvorrichtung nach einem der vorstehenden Ansprüche, wobei die Gewindestange auf jeder Seite eines mittleren Teils mindestens ein Gewinde (50-53) aufweist.

5. Befestigungsvorrichtung nach einem der Ansprüche 2 bis 4, wobei die Gewindestange mindestens ein zweites Gasdichtungsorgan aufweist, wobei dasselbe in einer zweiten Kehle angeordnet ist, die am mittleren Teil der Gewindestange gebildet ist.

6. Befestigungsvorrichtung nach einem der vorstehenden Ansprüche, wobei auf einer gegebenen Fläche (34a, 34b) des Rings mindestens ein Verwechslungsschutzelement (42a, 43) vorgesehen ist, um den Einbau eines eindeutigen Endes eines einzigen unter den leitenden Elementen an der gegebenen Fläche zu gestatten.

7. Baugruppe, die einen Trägerisolator für GIS und eine Befestigungsvorrichtung nach einem der vorstehenden Ansprüche aufweist, wobei mindestens ein Ring der Befestigungsvorrichtung im Trägerisolator angeordnet ist.

8. Baugruppe nach Anspruch 7, wobei der Trägerisolator um mindestens einen Ring der Befestigungsvorrichtung herum aufgeformt ist.

9. Baugruppe nach einem der Ansprüche 7 oder 8, wobei der Trägerisolator um Ringe (134) von drei Befestigungsvorrichtungen herum aufgeformt ist.

10. Baugruppe nach einem der Ansprüche 7 bis 9, wobei der Trägerisolator aus Polyesterharz oder aus Epoxidharz ist.

11. Anlage vom Typ GIS, die einen Trägerisolator aufweist, der mit mindestens einer Befestigungsvorrichtung nach einem der Ansprüche 1 bis 6 versehen ist.

12. Anlage vom Typ GIS nach dem vorstehenden Anspruch, wobei die leitenden Elemente auf der Gewindestange 33 montiert sind.

13. Anlage vom Typ GIS nach einem der Ansprüche 11 und 12, wobei die leitenden Elemente am Ring 34 montiert sind.

14. Verfahren zum Zusammenbauen eines ersten leitenden Elements und eines zweiten leitenden Elements beidseits einer Baugruppe nach einem der Ansprüche 7 bis 10, das die folgenden Schritte aufweist:
- Montieren eines ersten Endes der Gewindestange mit einem Ende des ersten leitenden Elements,
- Einschieben eines zweiten Endes der Gewindestange durch den Durchgang des Rings der Befestigungsrichtung hindurch,
- Montieren des zweiten Endes der Gewindestange mit einem Ende des zweiten leitenden Elements.

## Claims

1. Securing device for an installation of the PSEM type, comprising a threaded rod (33; 133; 233) that is conductive and a ring (34; 134; 234) that is conductive, the ring (34; 134; 234) comprising a passage (40, 41) configured to receive the threaded rod (33; 133; 233) in a manner sealed from gases, the threaded rod extending beyond each side of the ring (34; 134; 234) when it is received in the passage, the securing device being configured to electrically connect two conductive elements (32, 35; 132, 135; 232; 235) and to maintain each of them mounted on the threaded rod (33; 133; 233).

2. Securing device according to the preceding claim, the threaded rod comprising furthermore at least one first sealing member (36; 136; 236) from gases, the latter being arranged in a groove (55) formed on a median portion of the threaded rod.

3. Securing device according to the preceding claim, the groove (55) being arranged on a boss (54) formed on the median portion.

4. Securing device according to one of the preceding claims, the threaded rod comprising at least one threading (50-53) of each side of a median portion.

5. Securing device according to one of claims 2 to 4, the threaded rod comprising at least one second sealing member from gases, the latter being arranged in a second groove formed on the median portion of the threaded rod.

6. Securing device according to one of the preceding claims, at least one foolproof element (42a, 43) being provided on a given face (34a, 34b) of the ring in order to authorise the setting in place of a single end of one among the conductive elements against said given face.

7. Assembly comprising a supporting insulator for a PSEM and a securing device according to one of the preceding claims, at least one ring of the securing device being arranged in the supporting insulator.

8. Assembly according to claim 7, the supporting insulator being overmoulded around at least one ring of the securing device.

9. Assembly according to one of claims 7 or 8, the supporting insulator being overmoulded around rings (134) of three securing devices.

10. Assembly according to one of claims 7 to 9, the supporting insulator being made of polyester resin or epoxy resin.

11. Installation of the PSEM type comprising a supporting insulator provided with at least one securing device according to one of claims 1 to 6.

12. Installation of the PSEM type according to the preceding claim, with the conductive elements being mounted on the threaded rod 33.

13. Installation of the PSEM type according to one of claims 11 and 12, with the conductive elements being mounted against the ring 34.

14. Method for assembling a first conductive element and a second conductive element on either side of an assembly according to one of claims 7 to 10, comprising the following steps:
- mounting a first end of the threaded rod with one end of the first conductive element,
- inserting of a second end of the threaded rod through the passage of the ring of the securing device,
- mounting of the second end of the threaded rod with one end of the second conductive element.
